# EUROPEAN PATENT SPECIFICATION

(11) **EP 1 572 061 B1**
(45) Date of publication and mention of the grant of the patent: **13.01.2010**
(21) Application number: 03766079.2
(22) Date of filing: 01.08.2003
(51) Int. Cl.: A61G 9/00, A61G 5/10, A47K 11/12, A47K 11/02

(54) **SINGLE-USE LAVATORY**
TOILETTE ZUM EINMALIGEN GEBRAUCH
TOILETTES JETABLES

(30) Priority: 05.08.2002 BG 10697902
(43) Date of publication of application: 14.09.2005
(73) Proprietor: Georgieva, Katya, 1202 Sofia (BG)
(72) Inventor: Georgieva, Katya, 1202 Sofia (BG)
(74) Representative: Neykov, Neyko Hristov
(86) International application number: PCT/BG2003/000030
(87) International publication number: WO 2004/012642

(56) References cited:
- US-A- 1 269 901
- US-A- 4 996 727
- US-B1- 6 296 388
- DATABASE WPI Week 0197, 22 October 1996 (1996-10-22) Derwent Publications Ltd., London, GB; AN 1997-006351 XP002261101 -& JP 08 275908 A (IMARU KIYOSHI)

## Description

### Technical field

The invention refers to a single-use lavatory with application in the field of human necessities.

### Prior art

The Japanese patent No.2002078642 describes a single-use lavatory, that includes a main body with replaceable bag in it, containing an absorbing agent. The main body holds by means of a hinge the closing part with a magnet plate for retaining the closing part to the body. The closing part sticks tightly to a ring, connected to the upper open part of the main body. Under the ring, a tightening part is provided, which after using the lavatory, isolates the lower part of the body from the upper open part. The bag is discarded after usage to a suitable and appropriate place. See as well US 1 269 901 A.

An insufficiency of this solution is the availability of multiple-use parts, which require maintenance of the necessary hygiene (washing, disinfection, etc.), respectively. Besides, the structure of the portative lavatory is very complex for production and operation with a view to the large number of elements and the using of a separate closing device (cap).

### Technical subject-matter of the invention

The purpose of the present invention is to create a single-use lavatory, manufactured basically by single-use elements, with simplified design and suitable both for stationary sites and for vehicles as well.

The purpose has been achieved by creating a single-use lavatory, including a bag and a ring. The lavatory is characterized by that the ring is connected to the open end of the bag and consists of two hinged parts, joined so as to fold until entire sticking, whereupon they are locked to one another. Fixing pins are located in the spot of the two parts joining, allowing fixing of the two parts in one plane.

In one version of the lavatory execution a supporting plate is stuck along the sidewall of the bag to avert folding the bag after usage.

It is recommended the bag to contain an absorbing agent and/or infiltration matter.

The suitable shape of the ring is round or elliptical.

In another version of the lavatory execution the bag with the ring are placed in a stand, built by three sections, the first two of which are connected by means of a bending, fixing the two parts at 90° towards one another, and the second and the third part are connected by means of a bending, supporting the two parts at 180° towards one another, whereas there is a bed shaped in the second part, containing the ring.

In another version of execution the bag with the ring are placed in an opening, shaped in the seat of a small chair with extensible legs.

In another version of execution the bag with the ring are placed in the opening of a medicinal bed pan.

The advantages of the single-use lavatory according to the invention are in its structure made by elements, discarded after using which averts the necessity of additional cleaning and disinfection. What is more, the lavatory is structurally simplified, facilitating its operation and manufacturing.

### Description of the enclosed figures:

Figure 1 shows the bag in unfolded condition.
Figure 2 illustrates the ring in unfolded condition.
Figure 3 presents an elliptical ring in unfolded condition.
Figure 4 illustrates the bag and an assembled round ring.
Figure 5 shows the bag and an assembled elliptical ring.
Figure 6 presents the lavatory according to the invention, assembled in a stand.
Figure 7 presents the lavatory according to the invention, assembled in a medicinal bed-pan.

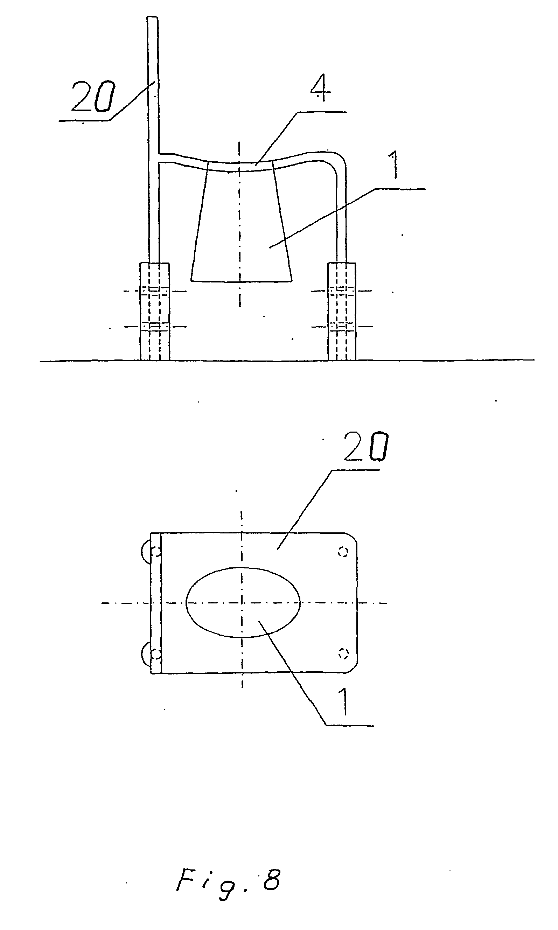

Figure 8 shows the lavatory according to the invention, assembled in a children's chair with extensible legs.

### Example for execution of the invention:

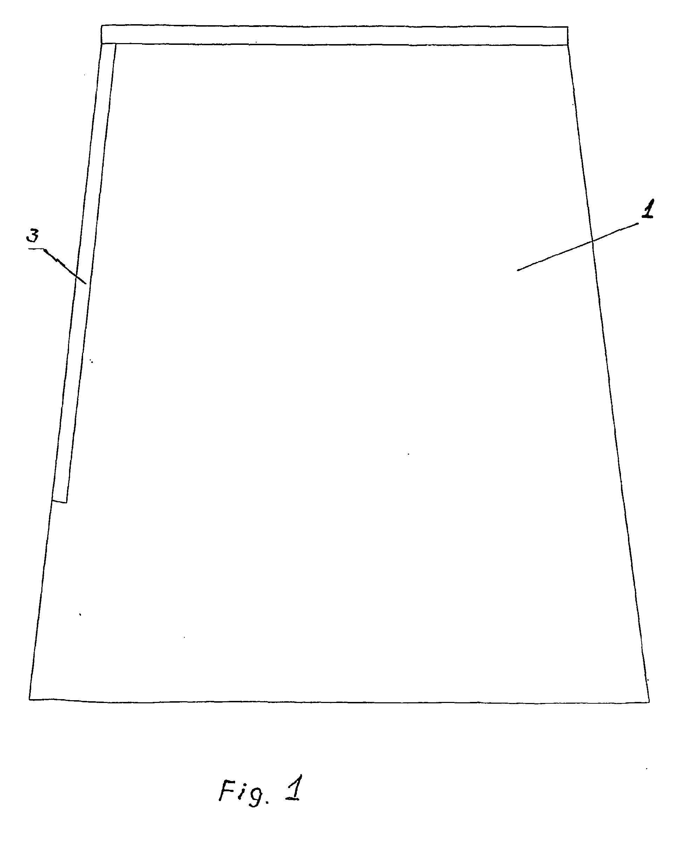

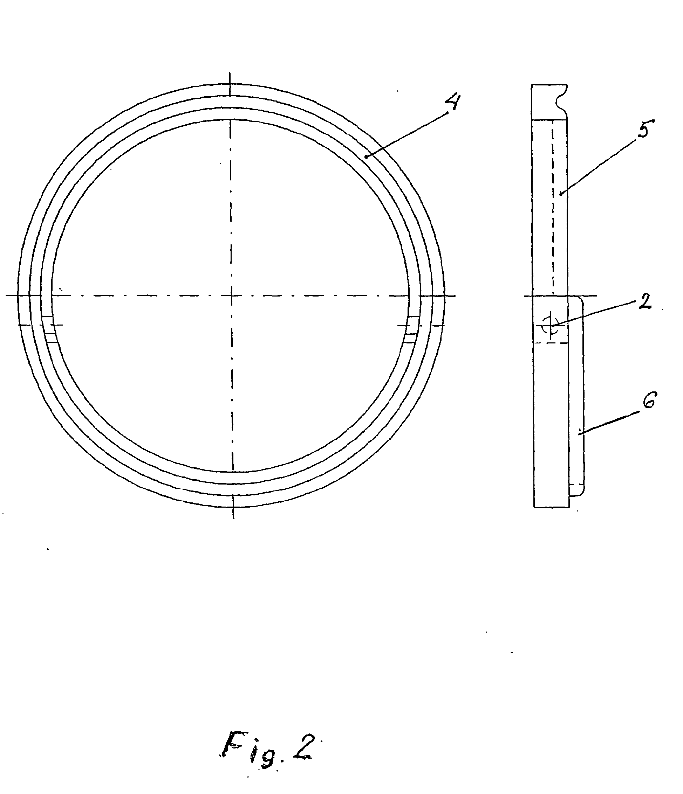

The single-use lavatory (Fig.1 and Fig.2) is made by bag 1, whose upper open end holds ring 4. Ring 4 is shaped by two hinged parts 5 and 6, connected by lock pin 2. When folding the two parts to one another they are locked, for example by a groove and an edge, coming into the groove by snapping. Other ways for locking the two parts are possible, too, for example by a gag, coming into an opening, etc. In open position the two parts 5 and 6 are fixed in one plane by the fixing pin 2. Firm band 3 is stuck on the side wall of bag 1, holding the wall of bag 1 in such a way as not to fold after using. Bag 1 might contain an absorbing agent (gel) as well infiltrating matter such as cotton, woodwool or others similar. It is possible to use a combination of an absoring agent and infiltrating matter. The quantity of the absorbng agent is from 4 g to 10 g. Bag 1 can be made by PVC or processed cellulose.

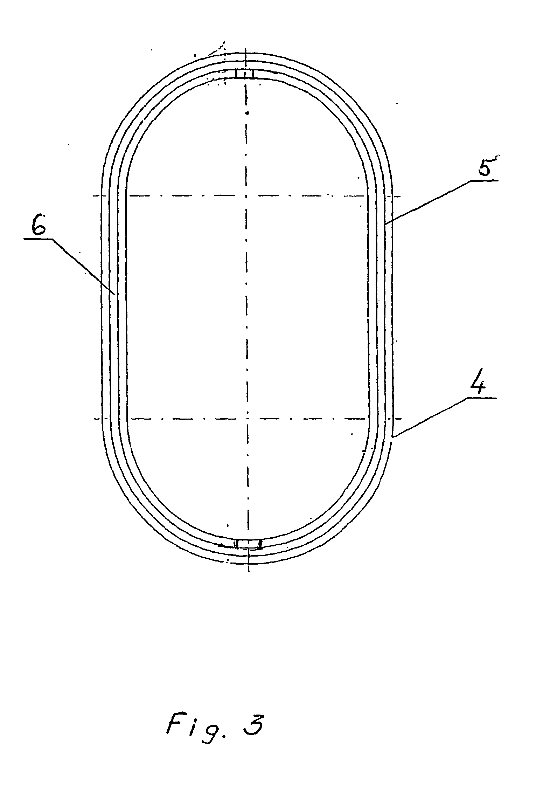

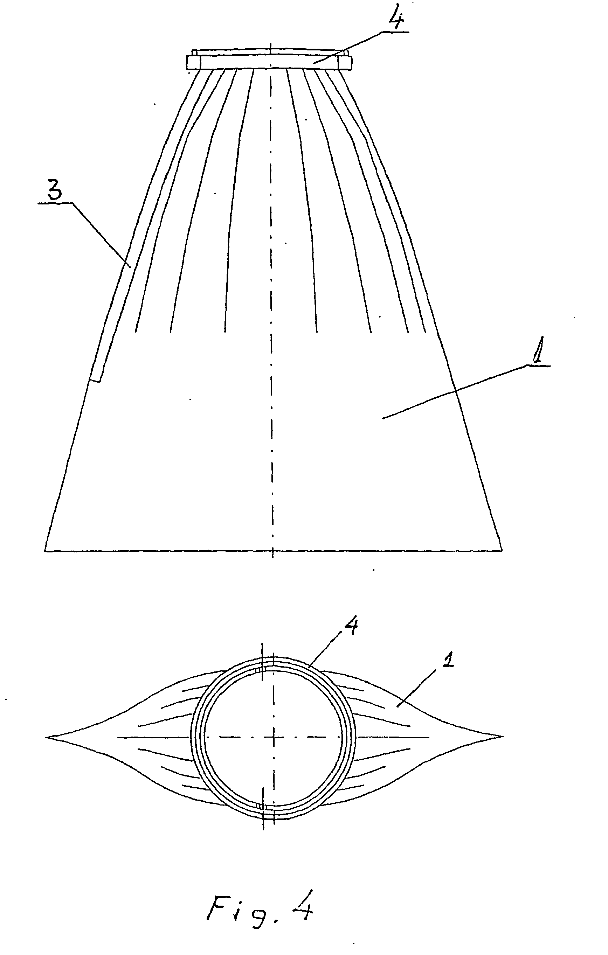

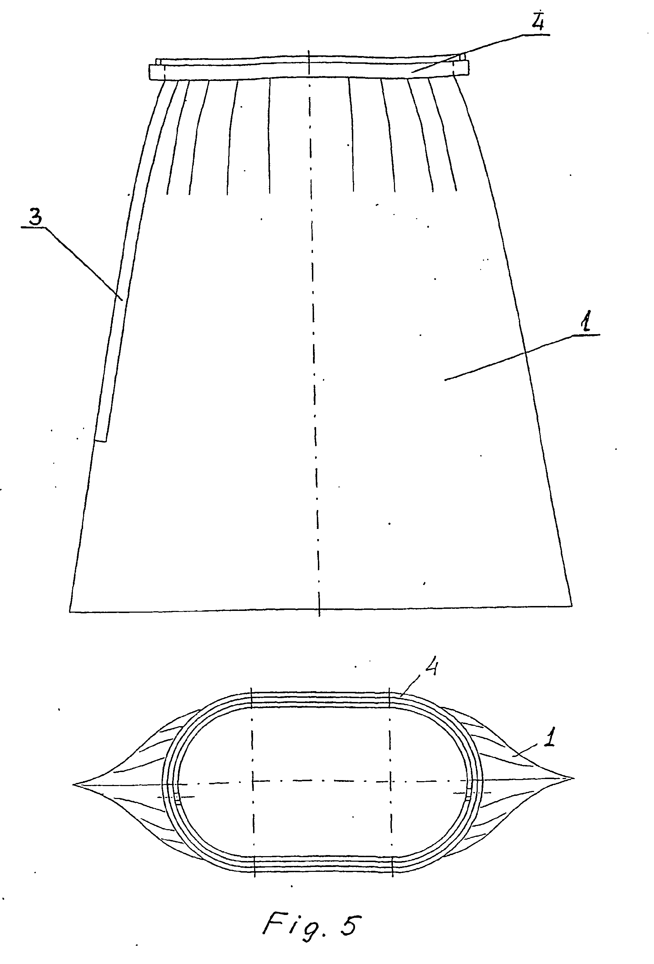

Ring 4 can be round (Fig. 4) or elliptical (Fig. 3 and Fig. 5) and can be manufactured with different sizes - for children or adults.

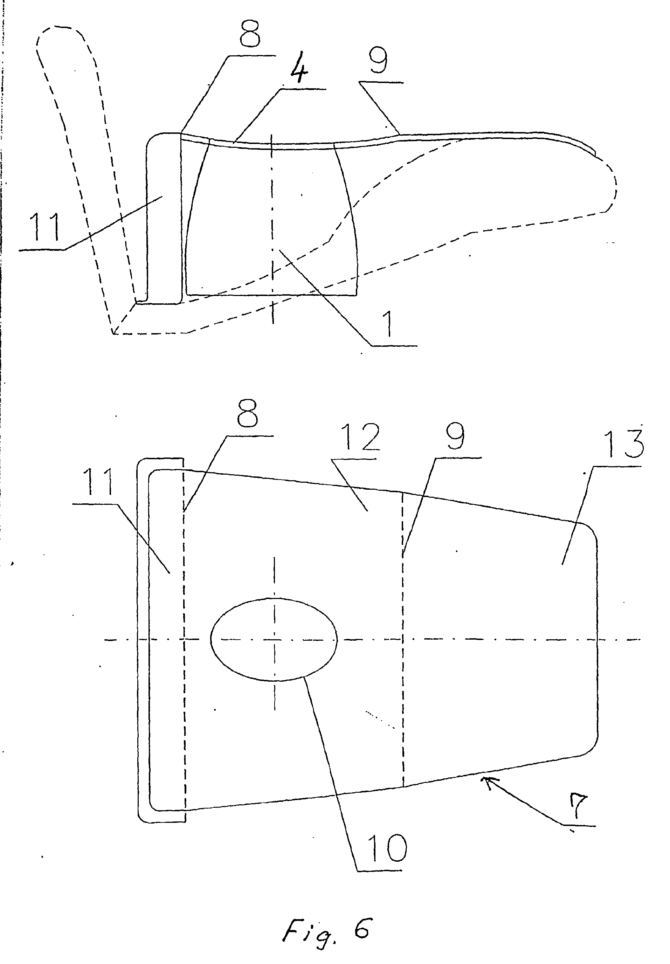

Bag 1 with ring 4 might be placed in stand 7 (Fig. 6), built by three sections 11, 12, and 13, the first two of which are joined by means of bending 8, fixing the two parts at 90° towards one another, and the second and the third parts 12 and 13 are connected by bending 9, which holds the two parts at 180° towards one another. Bed 10 is shaped in the second part 12, which contains ring 4 and bag 1.

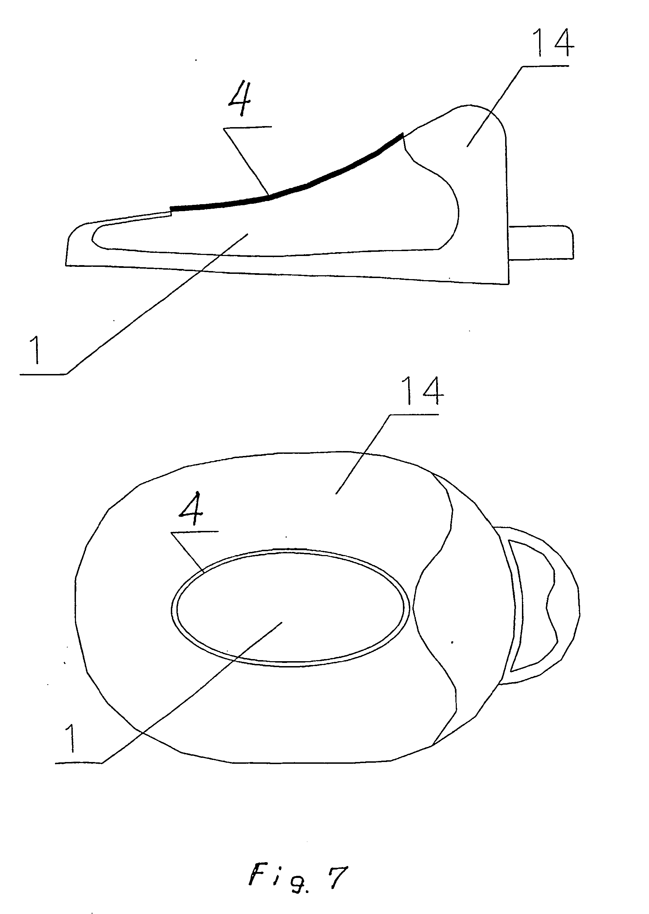

In the execution, shown in Fig.7, bag 1 with ring 4 are located in the opening of medicinal bed-pan 14.

The version of execution, presented in Fig.9, envisages assembly of bag 1 with ring 4 to chair with extensible legs 20.

### Utilization of the invention

The single-use lavatory is used by unfolding ring 4 and fixing it in this position by pin 2. After using it according to its designation, ring 4 is folded and locked. Bag 1 with ring 4 can be additionally put in a self-sticking bag, which might be offered in a set with the other items. All this shall be discarded to a suitable place. The article can be used in a set with a scenter and a disinfectant. When necessary, it is always near at hand since its all parts are placed in one bag. The invention is suitable for public bathrooms, during car driving, at hospitals and children's establishments, during hiking, etc.

## Claims

1. Single-use lavatory, including a bag (1) and a ring (4), wherein the ring (4) is connected to the open end of bag (1) and consists of two hinged parts, joined in such a way as to fold until complete sticking, whereupon they are locked to one another, **characterized by** that fixing pins (2) are placed in the connecting spot of the two parts, allowing fixing of the two parts in one plane and the bag (1) is made by PVC or processed cellulose.

2. Single-use lavatory according to claim 1, **characterized by** that along the side wall of bag (1) supporting plate (3) is stuck to avert bending of the bag after using.

3. Single-use lavatory according to claim 1 or 2, **characterized by** that bag (1) contains an absorbing agent and/or infiltrating matter.

4. Single-use lavatory according to one of claims 1 to 3, **characterized by** that ring (4) is with round shape.

5. Single-use lavatory according to one of claims 1 to 3, **characterized by** that ring (4) is with elliptical shape.

6. Single-use lavatory according to claim 1, **characterized by** that bag (1) with ring (4) are placed in stand (7), built by three sections (11, 12 and 13), the first two of which are connected by bending (8), fixing the two parts (11 and 12) at 90° towards one another, and the second (12) and the third (13) parts are connected by bending (9), which holds the two parts at 180° towards one another, whereas bed (10) is shaped in the second part (12) and contains ring (4).

7. Single-use lavatory according to claim 1, **characterized by** that bag (1) with ring (4) are placed in an opening, shaped in the seat of a small chair with extensible legs (20).

8. Single-use lavatory according to claim 1, **characterized by** that bag (1) with ring (4) are placed in the opening of a medicinal bed-pan (14).

## Patentansprüche

1. Einwegtoilette, bestehend aus einer Hülle (1) und einem Ring (4), der mit der offenen Hüllenseite (1) verbunden ist. Der Ring bestehl aus zwei Teilen, die gelenkig miteinander verbunden sind. Sie lassen sich bis zum vollständigen Anliegen zusammenklappen, wobei sie dann miteinander verriegelt sind. Im Bereich der Verbindung beider Teile befinden sich Befestigungsstifte (2), die die Befestigung dieser beiden Teile in einer Ebene erlauben. Die Hülle ist aus PVC oder bearbeiteter Zellulose gefertigt.

2. Die Einwegtoilette nach Anspruch 1, **dadurch gekennzeichnet, dass** an der seitlichen Wand der Hülle (1) eine Stützplatte (3) zum Vermeiden des Zusammenfaltens der Hülle nach dem Gebrauch aufgeklebt ist.

3. Die Einwegtoilette nach Anspruch 1 und 2, **dadurch gekennzeichnet, dass** in der Hülle (1) ein Absorbierstoff und/oder Aufsaugmaterial eingelegt ist.

4. Die Einwegtoilette nach Anspruch 1, 2 und 3, **dadurch gekennzeichnet, dass** der Ring (4) kreisförmig ist.

5. Die Einwegtoilette nach Anspruch 1, 2 und 3, **dadurch gekennzeichnet, dass** der Ring (4) ellipsenformig ist.

6. Die Einwegtoilette nach Anspruch 1, **dadurch gekennzeichnet, dass** die Hülle und der Ring in einem Ständer (7) sitzen. Dieser Ständer ist aus drei Segmenten (11, 12 u. 13) aufgebaut. Die beiden ersten sind durch einen Knick (8) miteinander verbunden, durch den sie (11 und 12) in einem Winkel von 90° zueinander stehen. Der zweite (12) und dritte Teil (13) sind durch einen Knick (9) miteinander verbunden, der sie in einem Winkel von 180° zueinander hält, wobei im zweiten Teil (12) eine Aufnahme ausgebildet ist, die den Ring (4) trägt.

7. Die Einwegtoilette nach Anspruch 1, **dadurch gekennzeichnet, dass** die Hülle (1) und der Ring (4) in der Öffnung (7) der Sitzfläche eines Stuhls mit ausziehbaren Füßen (20) sitzen.

8. Die Finwegtoilette nach Anspruch 1, **dadurch gekennzeichnet, dass** die Hülle (1) und der Ring (4) in der Öffnung einer Bettpfanne (14) sitzen.

## Revendications

1. Toilettes jetables, comprenant une enveloppe (1) et un anneau (4), attaché à l'extrémité ouverte de l'enveloppe (1) et constitué de deux parties, liées par une connexion à charnière de façon à être pliées jusqu'à leur collage serré, lors duquel celles-ci sont boutonnées l'une à l'autre, et **caractérisées en ce que** des goupilles de fixation (2), permettant la fixation des deux parties sur un même plan, sont placées dans l'endroit de jonction des deux parties, l'enveloppe (1) étant fabriquée en PVC ou en cellulose travaillée.

2. Toilettes jetables selon la revendication 1, **caractérisées en ce qu'**une lamelle de support (3) est collée sur la paroi latérale de l'enveloppe (1) pour empêcher le pliage de l'enveloppe après usage.

3. Toilettes jetables selon la revendication 1 ou 2, **caractérisées en ce qu'**un agent absorbant et/ou une matière absorbante est présente dans l'enveloppe (1).

4. Toilettes jetables selon l'une des revendications de 1 à 3, **caractérisées en ce que** la forme de l'anneau (4) est ronde.

5. Toilettes jetables selon l'une des revendications de 1 à 3, **caractérisées en ce que** la forme de l'anneau (4) est ellipsoïdale.

6. Toilettes jetables selon la revendication 1, **caractérisées en ce que** l'enveloppe (1) avec l'anneau (4) est placée dans un support (7), construit en trois sections (11, 12 et 13), dont les deux premières liées par l'intermédiaire d'une pliure (8), fixant les deux parties (11, 12) à 90° l'une par rapport à l'autre, et la deuxième (12) et la troisième (13) liées par l'intermédiaire d'une pliure (9), soutenant les deux parties à 180° l'une par rapport à l'autre, en formant un lit (10) dans lequel s'installe l'anneau (4) dans la deuxième partie (12).

7. Toilettes jetables selon la revendication 1, **caractérisées en ce que** l'enveloppe (1) avec l'anneau (4) est placée dans une ouverture formée dans le siège d'une chaise aux pieds réglables (20).

8. Toilettes jetables selon la revendication 1, **caractérisées en ce que** l'enveloppe (1) avec l'anneau (4) est placée dans l'ouverture d'un bassin de lit (14).
